(19) Europäisches Patentamt / European Patent Office / Office européen des brevets

(11) **EP 3 234 688 B1**

(12) **EUROPÄISCHE PATENTSCHRIFT**

(45) Veröffentlichungstag und Bekanntmachung des Hinweises auf die Patenterteilung:
**04.03.2020  Patentblatt 2020/10**

(21) Anmeldenummer: **15823506.9**

(22) Anmeldetag: **21.12.2015**

(51) Int Cl.:
**G02F 1/01** (2006.01)     **G02F 1/225** (2006.01)

(86) Internationale Anmeldenummer:
**PCT/EP2015/080782**

(87) Internationale Veröffentlichungsnummer:
**WO 2016/097406 (23.06.2016 Gazette 2016/25)**

(54) **ELEKTRO-OPTISCHER MODULATOR**

ELECTRO-OPTICAL MODULATOR

MODULATEUR ÉLECTRO-OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2014  DE 102014119195**

(43) Veröffentlichungstag der Anmeldung:
**25.10.2017  Patentblatt 2017/43**

(73) Patentinhaber: **Fraunhofer Gesellschaft zur Förderung der angewandten Forschung E.V.
80686 München (DE)**

(72) Erfinder: **BACH, Heinz-Gunter
14163 Berlin (DE)**

(74) Vertreter: **Maikowski & Ninnemann Patentanwälte Partnerschaft mbB
Postfach 15 09 20
10671 Berlin (DE)**

(56) Entgegenhaltungen:
**WO-A1-2013/104715     JP-A- 2004 151 590
US-A1- 2009 103 850**

• **K-O VELTHAUS ET AL: "High performance InP-based Mach-Zehnder modulators for 10 to 100 Gb/s optical fiber transmission systems", COMPOUND SEMICONDUCTOR WEEK (CSW/IPRM), 2011 AND 23RD INTERNATIONAL CONFERENCE ON INDIUM PHOSPHIDE AND RELATED MATERIALS, IEEE, 22. Mai 2011 (2011-05-22), Seiten 1-4, XP032009757, ISBN: 978-1-4577-1753-6 in der Anmeldung erwähnt**

**Beschreibung**

Elektro-optische Modulatoren (z.B. in Form von Mach-Zehnder Modulatoren) werden insbesondere zur hochbitratigen elektro-optischen Lichtmodulation verwendet, etwa für Bitraten zwischen 10 und 100 Gbit/s. Bekannte Mach-Zehnder Modulatoren werden häufig nach dem seriellen Push-Pull-Prinzip entworfen und betrieben, wie z.B. in der Publikation "High-Speed III-V Semiconductor Intensity Modulators", R. G. Walker, IEEE J. Quantum Electronics Vol. 27, No. 3 (1991) 654-667 beschrieben. Insbesondere weisen derartige Modulatoren über Elektroden mit einer HF-Spannung belegbare und über ein elektrisch leitfähiges Gebiet miteinander gekoppelte Kapazitäten auf. Die Kapazitäten sind jeweils einem optischen Wellenleiter des Modulators zugeordnet, wobei über die Kapazitäten die HF-Spannung auf die optischen Wellenleiter einwirken kann. Auf diese Weise kann die HF-Spannung die Phase einer in den Wellenleiter geführten optischen Welle beeinflussen.

Wünschenswert für eine einwandfreie Funktion des Modulators (insbesondere zur Realisierung einer Amplitudenmodulation möglichst ohne Chirp der optischen Phase) ist eine auch dynamisch wirksame hälftige Aufteilung der HF- Spannung, weshalb die den Modulatorelektroden zugeordneten Kapazitäten insbesondere gleich groß gewählt werden. Die Einspeisung der HF-Spannung erfolgt z.B. asymmetrisch ("single-ended"), d.h. eine der Elektroden ist auf Massepotential, während in die andere Elektrode das HF-Signal eingespeist wird. Des Weiteren werden die Elektroden mit einer Gleichspannung (Vorspannung) beaufschlagt, um einen Arbeitspunkt des Modulators einstellen zu können. Die Vorspannung wird insbesondere über eine Zuleitung an das elektrisch leitfähige Gebiet, über das die Kapazitäten des Modulators miteinander gekoppelt sind, angelegt. Ein Beispiel für einen derartigen Modulator ist in dem Artikel "High performance InP-based Mach-Zehnder modulators for 10 to 100 Gb/s optical fiber transmission systems", K.-O. Velthaus et al., IPRM 2011, paper Th-9.2.1 offenbart.

Die Phase einer sich in den optischen Wellenleitern derartiger asymmetrisch betriebener Modulatoren ausbreitenden optischen Wellen weist beim Anlegen einer rechteckförmigen HF-Spannung an die signalführende Modulatorelektrode häufig einen unerwünscht langsamen, transienten Schaltflankenverlauf auf, der z.B. auf ein den HF-Spannungsimpulsflanken nachklingendes Umladen der verbundenen Kapazitäten des Modulators und der Zuleitung zum Einspeisen der Vorspannung zurückgeht. Mit diesem transienten Phasenverlauf geht ein Chirp des optischen Modulatorsignals einher, der sich negativ auf die Bandbreite des Modulators auswirken kann. Insbesondere stört ein optischer Chirp den Betrieb von Anordnungen, die mehrere miteinander verschaltete Modulatoren umfassen, z.B. sog. IQ-Modulatoren. WO 2013/104715 und JP 2004 151590 offenbaren die Merkmale der Präambel des unabhängigen Anspruchs 1.

Das der vorliegenden Erfindung zugrunde liegende Problem besteht darin, einen möglichst chirparmen Betrieb eines elektro-optischen Modulators, insbesondere auch unter asymmetrischer Hochfrequenzansteuerung, zu ermöglichen.

Dieses Problem wird durch einen elektro-optischen Modulator mit den Merkmalen des Anspruchs 1 gelöst. Weiterbildungen der Erfindung sind in den abhängigen Ansprüchen angegeben.

Danach wird ein elektro-optischer Modulator bereitgestellt, mit

- einem ersten und einem zweiten optischen Wellenleiter;
- mindestens einer ersten Kapazität, über die eine Spannung an einen lichtführenden Bereich des ersten optischen Wellenleiters anlegbar ist;
- mindestens einer zweiten Kapazität, über die eine Spannung an einen lichtführenden Bereich des zweiten optischen Wellenleiters anlegbar ist;
- einem elektrisch leitfähigen Gebiet, über das die erste und die zweite Kapazität miteinander verbunden sind;
- einer Zuleitung zu dem elektrisch leitfähigen Gebiet, über die eine Gleichspannung an das elektrisch leitfähige Gebiet anlegbar ist, wobei die Zuleitung so beschaffen ist, dass sie einen parallel zu der zweiten Kapazität geschalteten elektrischen Widerstand darstellt; und
- einem parallel zur ersten Kapazität geschalteten Kompensationswiderstand zur Reduzierung von Transienten in einem Spannungsverlauf an der ersten und der zweiten Kapazität beim Betrieb des Modulators, wobei
- der Kompensationswiderstand von der ersten Kapazität oder bei mehreren ersten Kapazitäten von einer ersten Gesamtkapazität C1ges, dem Widerstand der Zuleitung und der zweiten Kapazität C2 bzw. bei mehreren zweiten Kapazitäten von einer zweiten Gesamtkapazität C2ges abhängt, wobei das Produkt Rn_comp · C1 bzw. das Produkt Rn_comp · C1ges im Intervall (Rn_acc · C2) +- 20% bzw. (Rn_acc · C2ges) +- 20% liegt.

Der Kompensationswiderstand sorgt für eine möglichst frequenzunabhängige Aufteilung einer an den Modulator eingespeisten Wechselspannung (insbesondere einer HF-Spannung) auf die erste und die zweite Kapazität, wodurch die eingangs beschriebenen Transienten in dem zeitlichen Verlauf der optischen Phase reduziert oder zumindest im Wesentlichen eliminiert werden.

Es wird darauf hingewiesen, dass mehrere erste und/oder die zweite Kapazitäten, insbesondere hintereinander entlang der optischen Wellenleiter angeordnet sind, vorhanden sein können. Die mehreren ersten Kapazitäten sind dann mit den mehreren zweiten Kapazitäten über das elektrische leitfähige Gebiet miteinander verbunden. Denkbar ist allerdings auch, dass jedem Wellenleiter nur eine einzige Kapazität zugeordnet ist.

Gemäß der Erfindung hängt der Kompensationswiderstand Rn_comp (d.h. der Wert des Kompensationswiderstandes) von der ersten Kapazität C1 oder bei mehreren ersten Kapazitäten von einer ersten Gesamtkapazität C1ges, dem Widerstand Rn_acc der Zuleitung und der zweiten Kapazität C2 bzw. bei mehreren zweiten Kapazitäten von einer zweiten Gesamtkapazität C2ges ab, wobei das Produkt Rn_comp · C1 bzw. das Produkt Rn_comp · C1ges im Intervall (Rn_acc · C2) +- 20% bzw. (Rn_acc · C2ges) +- 20% oder im Intervall (Rn_acc · C2) +- 10% bzw. (Rn_acc · C2ges) +- 10% liegt, oder das Produkt Rn_comp · C1 bzw. Rn_comp · C1ges zumindest im Wesentlichen dem Produkt Rn_acc · C2 bzw. Rn_acc · C2ges entspricht.

Denkbar ist auch, dass die erste und die zweite Kapazität zumindest im Wesentlichen gleich sind. Daher kann der Kompensationswiderstand auch nur von dem Widerstand Rn_acc der Zuleitung abhängen, wobei der Kompensationswiderstand insbesondere im Intervall R_acc +- 20% oder R_acc +- 10% liegt, oder der Kompensationswiderstand (d.h. der Wert des Kompensationswiderstandes) zumindest im Wesentlichen dem Widerstand (d.h. dem Wert des Widerstandes) R_acc der Zuleitung entspricht.

Bei der Bemessung der Größe und der Art und Weise des Anschließens des Kompensationswiderstandes kann zudem auch ein Widerstand des elektrischen leitfähigen Gebietes, über das die erste und die zweite Kapazität miteinander verbunden sind, eingehen. Möglich ist allerdings auch, dass dieser Widerstand gegenüber dem Widerstand der Zuleitung vernachlässigbar ist, so dass der Kompensationswiderstand lediglich abhängig von dem Widerstand der Zuleitung gewählt wird.

Die Zuleitung zu dem elektrisch leitfähigen Gebiet verläuft beispielsweise zwischen dem elektrisch leitfähigen Gebiet und einer mit einer Gleichspannungsquelle verbindbaren Kontaktfläche. Denkbar ist allerdings auch, dass sich die Zuleitung von dem elektrisch leitfähigen Gebiet bis zu einer Gleichspannungsquelle zur Erzeugung der Gleichspannung (Vorspannung) erstreckt.

Gemäß einer anderen Ausgestaltung der Erfindung sind eine erste Elektrode zur Kontaktierung der ersten Kapazität und eine zweite Elektrode zur Kontaktierung der zweiten Kapazität vorgesehen, wobei der Kompensationswiderstand insbesondere elektrisch einerseits mit der ersten Elektrode und andererseits mit dem elektrisch leitfähigen Gebiet verbunden ist.

Die erste Elektrode stellt z.B. eine Signalelektrode und die zweite Elektrode eine Masseelektrode dar, d.h. der Modulator wird so beschaltet, dass die zweite Elektrode mit Masse verbunden ist, während in die erste Elektrode das Signal eingespeist wird. Der erfindungsgemäße Modulator wird also insbesondere asymmetrisch betrieben, wobei die erste und die zweite Elektrode insbesondere als Travelling-Wave-Elektroden ausgebildet sind. Es wird allerdings darauf hingewiesen, dass die Erfindung nicht auf Travelling-Wave-Modulatoren beschränkt ist, sondern z.B. auch in anderen Modulatoren (etwa Modulatoren mit "Lumped"-Elektroden) realisiert sein kann.

Beispielsweise ist die erste Kapazität durch einen kapazitiven Abschnitt des ersten Wellenleiters und die zweite Kapazität durch einen kapazitiven Abschnitt des zweiten Wellenleiters ausgebildet. Insbesondere weist der Modulator wie bereits erwähnt eine Mehrzahl von ersten Kapazitäten, die z.B. durch eine Mehrzahl von kapazitiven Abschnitten des ersten Wellenleiters ausgebildet sind, sowie eine Mehrzahl von zweiten Kapazitäten, die z.B. durch eine Mehrzahl von kapazitiven Abschnitten des zweiten Wellenleiters ausgebildet sind, auf, wobei die mehreren ersten kapazitiven Abschnitte und die mehreren zweiten kapazitiven Abschnitte z.B. über die oben erwähnten Elektroden kontaktiert werden.

Der Modulator ist insbesondere ein Halbleiterbauelement, wobei das elektrisch leitfähige Gebiet z.B. durch mindestens eine n-dotierte oder p-dotierte Halbleiterschicht gebildet ist und die kapazitiven Abschnitte der Wellenleiter in Form von p-i-n-Dioden realisiert sind. Ein mögliches prinzipielles elektrisches und optisches Design, aus dem der erfindungsgemäße Modulator weiterentwickelt werden kann, ist in der bereits oben erwähnten Publikation "High performance InP-based Mach-Zehnder modulators for 10 to 100 Gb/s optical fiber transmission systems", K.-O. Velthaus et al., IPRM 2011, paper Th-9.2.1 beschrieben, auf die insofern ausdrücklich Bezug genommen wird.

Die Erfindung ist jedoch nicht auf diesen Modulatortyp beschränkt. Denkbar ist z.B. auch die Verwendung mehrerer Treiber, die jeweils einem kapazitiven Abschnitt der optischen Wellenleiter zugeordnet sind. Ein derartiges elektrisches Design des Modulators ist z.B. in dem Artikel "10 Gb/s - 80-km operation of full C-band InP MZ modulator with linear-accelerator-type tiny in-line centipede electrode structure directly driven by logic IC of 90-nm CMOS process", T. Kato et al., Optical Fiber Communication Conference and Exposition, 2011, p. 1, gezeigt.

Gemäß einer weiteren Ausgestaltung der Erfindung ist der Kompensationswiderstand durch mindestens zwei in Reihe geschaltete Widerstandselemente gebildet, wobei beispielsweise seriell zu (z.B. physikalisch zwischen) den Widerstandselementen ein Kondensator angeordnet ist. Die Verwendung mindestens zweier Widerstandselemente (anstelle eines einzelnen Widerstandes) als Kompensationswiderstand dient insbesondere dazu, eine streukapazitive Belastung einer mit der ersten und/oder zweiten Kapazität verbundenen Elektrode (z.B. in Form der oben erwähnten Travelling-Wave-Elektroden) sowie auch des dotierten leitfähigen Gebiets möglichst gering zu halten.

Der Kompensationswiderstand und die Zuleitung zum elektrisch leitfähigen Gebiet sind - entlang der Ausbreitungsrichtung einer in den Modulator eingekoppelten optischen Welle betrachtet - insbesondere jeweils mit dem vorderen Abschnitt des elektrisch leitfähigen Gebietes verbunden, oder der Kompensationswiderstand und die Zuleitung zu dem elektrisch leitfähigen Gebiet sind jeweils mit einem hinteren Abschnitt des elektrisch leitfähigen Gebietes verbunden. Somit sind der Kompensationswiderstand und die Zuleitung jeweils mit derselben Seite des elektrisch leitfähigen Gebietes verbunden, wobei der genaue Bereich des vorderen bzw. hinteren Abschnitts des elektrisch leitfähigen Gebietes, mit dem sie jeweils verbunden sind, natürlich nicht identisch sein muss.

Als "vorderer Abschnitt" des elektrisch leitfähigen Gebietes wird insbesondere ein Bereich angesehen, der einem Modulatoreingang zugewandt ist und der z.B. eine Ausdehnung entlang der Ausbreitungsrichtung des im Modulator geführten Lichtes besitzt, die zumindest näherungsweise die Hälfte oder ein Drittel der Ausdehnung des (z.B. zumindest annähernd rechteckigen) elektrisch leitfähigen Gebietes entlang der Ausbreitungsrichtung des Lichtes beträgt. Entsprechend kann unter dem "hinteren Abschnitt" des elektrisch leitfähigen Gebietes ein Bereich angesehen werden, der einem Modulatorausgang zugewandt ist und der z.B. eine Ausdehnung entlang der Ausbreitungsrichtung des im Modulator geführten Lichtes (d.h. der Längsrichtung des Modulators) besitzt, die zumindest näherungsweise die Hälfte oder ein Drittel der Ausdehnung des elektrisch leitfähigen Gebietes entlang der Längsrichtung des Modulators beträgt.

Darüber hinaus kann der Kompensationswiderstand mit einem - entlang der Ausbreitungsrichtung einer in den Modulator eingekoppelten optischen Welle betrachtet - vorderen oder hinteren Endabschnitt der ersten Elektrode verbunden sein. Analog zum vorderen bzw. hinteren Abschnitt des elektrisch leitfähigen Gebietes wird unter dem "vorderen" bzw. dem "hinteren" Endabschnitt insbesondere ein Bereich der ersten Elektrode angesehen, der einem Modulatoreingang zu- bzw. abgewandt ist und der z.B. eine Ausdehnung entlang der Längsrichtung des Modulators besitzt, die zumindest näherungsweise die Hälfte oder ein Drittel der Ausdehnung des ersten Elektrode in dieser Richtung besitzt.

Des Weiteren kann sich die Zuleitung zu dem elektrisch leitfähigen Gebiet von einer Kontaktfläche erstrecken, die sich - entlang der Ausbreitungsrichtung einer in den Modulator eingekoppelten optischen Welle betrachtet - vor der ersten und der zweiten Elektrode befindet.

Denkbar ist auch, dass das elektrisch leitfähige Gebiet durch einen Teilabschnitt einer dotierten Halbleiterschicht gebildet ist, der mit einem weiteren Teilabschnitt der dotierten Halbleiterschicht verbunden ist, der das elektrisch leitfähige Gebiet ausformt. Mit anderen Worten werden sowohl die Zuleitung als auch das elektrisch leitfähige Gebiet durch dieselbe Halbleiterschicht gebildet. Der Teilabschnitt, der die Zuleitung ausbildet, weist z.B. eine leitungsartige, längliche Form auf, die sich zu dem (z.B. rechteckigen) weiteren Teilabschnitt der dotierten Halbleiterschicht erstreckt. Möglich ist natürlich auch, dass die Zuleitung nicht durch die dotierte Halbleiterschicht ausgebildet wird, sondern in Form einer separaten Leitung, etwa in Form eines Bonddrahtes.

Alternativ oder zusätzlich kann der Kompensationswiderstand durch einen Teilabschnitt einer dotierten Halbleiterschicht ausgebildet sein, die einen weiteren Teilabschnitt zum Anschließen des elektrisch leitfähigen Gebiets ausbildet.

Der Kompensationswiderstand ist gemäß einer weiteren Ausgestaltung der Erfindung monolithisch mit anderen Komponenten des Modulators integriert, d.h. zumindest einige Komponenten des Modulators und der Kompensationswiderstand sind auf einem gemeinsamen Substrat angeordnet. Denkbar ist auch, dass bei der oben erwähnten Variante, wonach der Kompensationswiderstand mindestens zwei Widerstandselemente aufweist, zumindest eines der Widerstandselemente mit auf dem Modulatorsubstrat angeordnet ist. Der ebenfalls bereits erwähnte Kondensator zwischen den Widerstandselementen kann dabei auf einem zum Modulator separaten Substrat angeordnet sein.

In einer anderen Weiterbildung der Erfindung weist der Modulator einen mit der ersten und der zweiten Elektrode verbundenen Abschlusswiderstand auf, der sich auch auf einem anderen Substrat befinden kann als die erste und die zweite Elektrode (d.h. der Abschlusswiderstand ist nicht monolithisch mit der optischen und elektrischen Grundstruktur des Modulators integriert), wobei zumindest eines der Widerstandselemente des Kompensationswiderstandes mit auf dem Substrat des Abschlusswiderstandes angeordnet ist.

Die Erfindung betrifft auch eine Modulatoranordnung, mit mindestens einem ersten und einem zweiten elektro-optischen Modulator, wobei mindestens einer der beiden Modulatoren wie oben beschrieben ausgebildet ist. Beispielsweise handelt es sich bei der Modulatoranordnung um einen IQ-Modulator.

Der Erfindung wird im Folgenden anhand von Ausführungsbeispielen unter Bezugnahme auf die Figuren näher erläutert. Es zeigen:

Fig. 1       schematisch in perspektivischer Darstellung einen konventionellen elektro-optischen Mach-Zehnder-Modulator;

Fig. 2       den zeitlichen Verlauf der Phase einer optischen Welle nach Durchlaufen verschiedener Modulatoren bei Anlegen von rechteckförmigen Spannungsänderungen an die Elektroden der Modulatoren;

Fig. 3       ein Ersatzschaltbild eines konventionellen elektro-optischen Modulators mit asymmetrischer Hochfrequenzspeisung;

Fig. 4       ein Ersatzschaltbild eines elektro-optischen Modulators gemäß einem ersten Ausführungsbeispiel der Erfindung;

Fig. 5    ein Ersatzschaltbild eines elektro-optischen Modulators gemäß einem zweiten Ausführungsbeispiel der Erfindung;

Fig. 6A    den zeitlichen Verlauf der Phase einer optischen Welle im Modulator aus Fig. 4 bei Anlegen von rechteckförmigen Spannungsänderungen an die Elektroden des Modulators; wobei die modulierte Phase im wesentlichen proportional zu den Feldstärken respektive den Spannungswerten in bzw. an den p-i-n-Dioden ist.

Fig. 6B    den zeitlichen Verlauf der Phase im Modulator aus Fig. 5 einer optischen Welle im Modulator aus Fig. 5 bei Anlegen von rechteckförmigen Spannungsänderungen;

Fig. 7    ein Ersatzschaltbild eines elektro-optischen Modulators gemäß einem dritten Ausführungsbeispiel der Erfindung;

Fig. 8    ein Ersatzschaltbild eines elektro-optischen Modulators gemäß einem vierten Ausführungsbeispiel der Erfindung;

Fig. 9    schematisch eine Draufsicht eines elektro-optischen Modulators nach einem fünften Ausführungsbeispiel der Erfindung;

Fig. 10    eine Abwandlung des Modulators aus Fig. 9;

Fig. 11    schematisch eine Draufsicht eines elektro-optischen Modulators gemäß einem weiteren Ausführungsbeispiel der Erfindung; und

Fig. 12    schematisch eine Draufsicht einer Modulatoranordnung umfassend zwei miteinander verschaltete erfindungsgemäße Modulatoren.

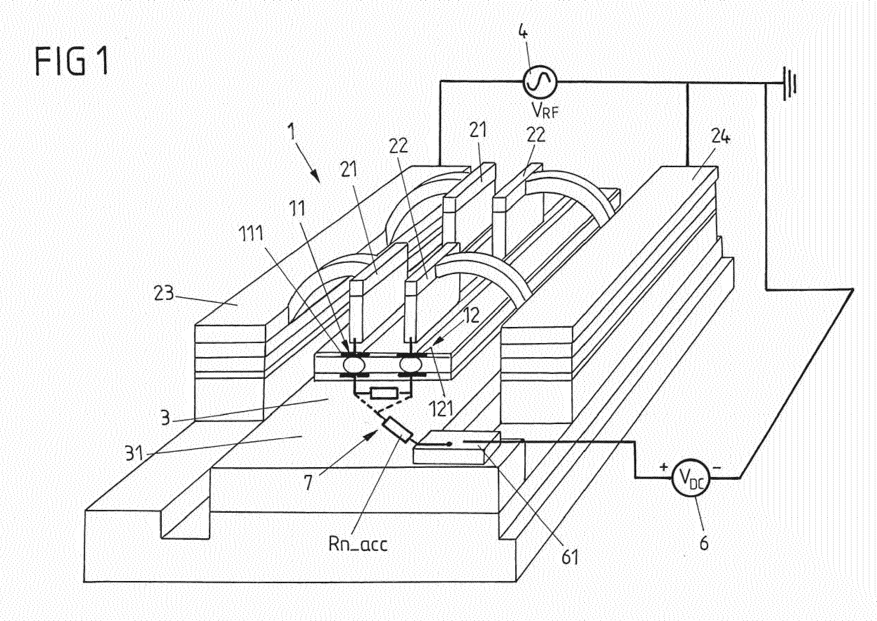

Figur 1 zeigt das grundsätzliche Design eines in Form eines Halbleiterbauelementes realisierten konventionellen Mach-Zehnder-Modulators 1. Der Mach-Zehnder-Modulator 1 weist einen ersten und einen zweiten optischen Wellenleiter 11, 12 auf, wobei kapazitive Abschnitte 111, 121 der Wellenleiter 11, 12 eine Mehrzahl von Kapazitäten ausbilden, über die jeweils eine Spannung an einen lichtführenden Bereich der Wellenleiter 11, 12 (insbesondere an einen Kern der Wellenleiter 11, 12) angelegt werden kann. Die kapazitiven Abschnitte 111, 121 sind jeweils durch p-i-n-Dioden-Sektionen der optischen Wellenleiter 11, 12 gebildet und über ein leitfähiges Gebiet in Form eines n-dotierten Gebietes 3 antiseriell miteinander verbunden.

Des Weiteren umfasst der Modulator 1 mehrere Wellenleiterelektroden 21, 22, die jeweils auf den kapazitiven Abschnitten 111, 121 angeordnet sind. Die Wellenleiterelektroden 21, 22 sind über Luftbrücken mit einer ersten bzw. einer zweiten Elektrode in Form einer ersten bzw. zweiten Koplanarleitung 23, 24 verbunden, wobei die Koplanarleitungen 23, 24 und die Wellenleiterelektroden 21, 22 nach Art einer Travelling-Wave-Leitung ausgebildet sind. Bei Anlegen einer HF-Spannung V an die Koplanarleitungen 23, 24 (über eine HF-Spannungsquelle 4) fällt über die ersten kapazitiven Abschnitte 111 eine erste Spannung +V/2 ab, während über die zweiten kapazitiven Abschnitte 121 eine Spannung -V/2 abfällt (an sich bekannter serieller "push-pull"-Betrieb).

Die p-i-n-Dioden der kapazitiven Abschnitte 111, 121 werden mit Hilfe einer Gleichspannungsquelle 6 in Sperrrichtung vorgespannt, wobei die Gleichspannung zwischen dem n-dotierten Gebiet 3 und der zweiten, auf Masse liegenden Koplanarleitung 24 angelegt wird. Genauer wird die Spannungsquelle 6 mit einer Kontaktfläche 61 ("DC-Pad") verbunden, die wiederum das n-dotierte Gebiet 3 kontaktiert. Insbesondere befindet sich die Kontaktfläche 61 auf einem ersten Abschnitt 31 einer Halbleiterschicht, der bis zu einem zweiten Abschnitt der Halbleiterschicht verläuft, der das n-dotierte Gebiet 3 ausbildet. Die Kontaktfläche 61 befindet sich außerhalb eines von den Koplanarleitungen 23, 24 begrenzten Gebietes.

Der erste Abschnitt 31 bildet somit eine Zuleitung 7 aus, über die die Gleichspannung an das n-dotierte Gebiet 3 angelegt wird. Die Zuleitung 7 besitzt einen Widerstand Rn_acc, der insbesondere auf die Schichtenstruktur des Modulators zurückgeht. Entsprechend stellt die Zuleitung 7 einen parallel zu den zweiten kapazitiven Abschnitten 121 geschalteten Widerstand Rn_acc dar, der z.B. in der Größenordnung von 500 Ohm liegt. Das n-dotierte Gebiet 3 bildet einen Widerstand Rn-contact zwischen einander gegenüberliegenden kapazitiven Abschnitten 111, 121 aus, wobei z.B. Rn-contact möglichst < 1 $\Omega$ gilt.

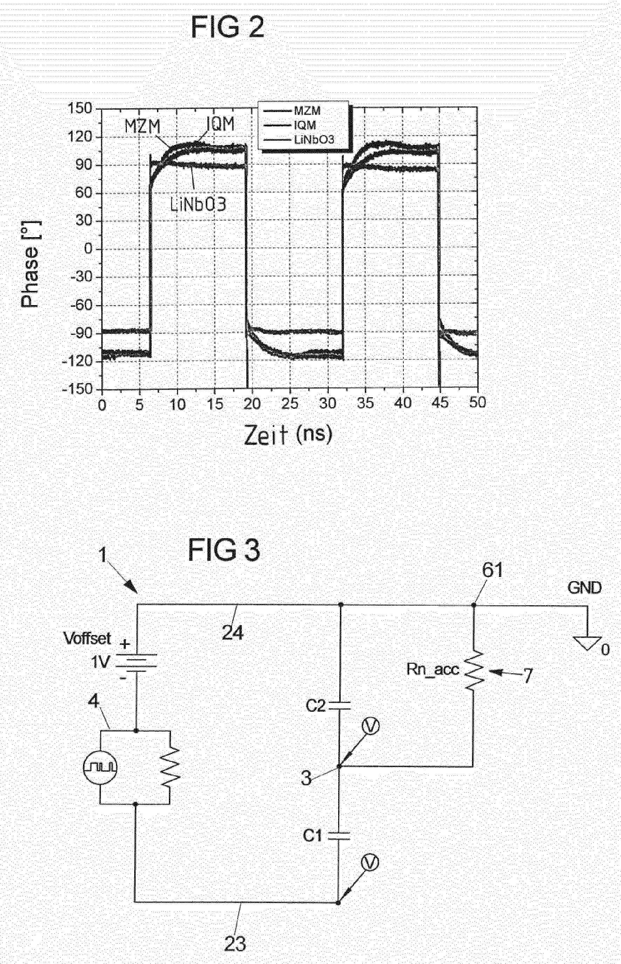

Der in Fig. 1 dargestellte Modulator 1 wird einseitig massebezogen betrieben, d.h. asymmetrisch, wobei eine der Koplanarleitungen 23, 24 (die Leitung 23) mit einem HF-Signal beaufschlagt wird, während die andere Koplanarleitung 24 auf Masse liegt. Denkbar ist natürlich auch, dass der Modulator spiegelsymmetrisch zu Fig. 1 beschaltet ist, d.h. die Leitung 24 auf Masse liegt. Der asymmetrische Betrieb des Modulators führt zu langsamen transienten Ausgleichsvorgängen zwischen den (anti)seriell-gekoppelten p-i-n-Dioden der kapazitiven Abschnitte 111, 121 und somit zu Phasendriftvorgängen (d.h. zu einem optischen Chirp), z.B. mit Zeitkonstanten um 2 ns. Die auftretenden transienten Schaltvorgänge sind in Fig. 2 illustriert, wonach sowohl bei einem Mach-Zehnder-Modulator (Kurve "MZM" in Fig. 2) des in Fig. 1 gezeigten Typs (d.h. bei Modulatoren auf Halbleiterbasis wie z.B. InP), als auch bei einem IQ-Mach-Zehnder-Modulator (Kurve "IQM") basierend auf Modulatoren des in Fig. 1 gezeigten Typs die durch Anlegen einer HF-Spannung hervorgerufenen Änderungen der Phase einer in den Modulator eingespeisten Lichtwelle einen deutlich transienten Verlauf besitzen, d.h. ein Einschwingverhalten mit einer nicht zu vernachlässigenden Zeitkonstanten (etwa die bereits erwähnten 2 ns) zeigen. Modulatoren auf Basis von Lithiumniobat (Kurve "LiNbO3") zeigen meist einen deutlich weniger transienten Verlauf.

Eine Ursache für das transiente Schaltverhalten kann in dem bei jedem Schaltvorgang erfolgenden Umladen der Kapazitäten der kapazitiven Abschnitte 111, 121 über den Zugangswiderstand R_acc gesehen werden. Mit Hilfe einer Simulation des Modulatorschaltverhaltens basierend auf dem in Fig. 3 gezeigten Ersatzschaltbild des Modulators 1 aus Fig. 1 können die gemessenen transienten Phasenänderungen (Fig. 2) nachvollzogen werden.

Die Mehrzahl der nach dem Wanderwellenprinzip longitudinal vorgesehenen Einzeldiodenpaare (vgl. Fig. 1, die p-i-n-Dioden der kapazitiven Abschnitte 111, 121) ist im Ersatzschaltbild der Fig. 3 in zwei Gesamtkapazitäten C1 und C2 zusammengefasst. Dies ist insbesondere deshalb gerechtfertigt, da die hier betrachtete Chirpzeitkonstante (~2 ns) sehr viel länger als die Durchlaufzeit der elektrischen Wanderwelle (-0,03 ns) durch den Modulator (durch die Koplanarleitungen 23, 24) ist.

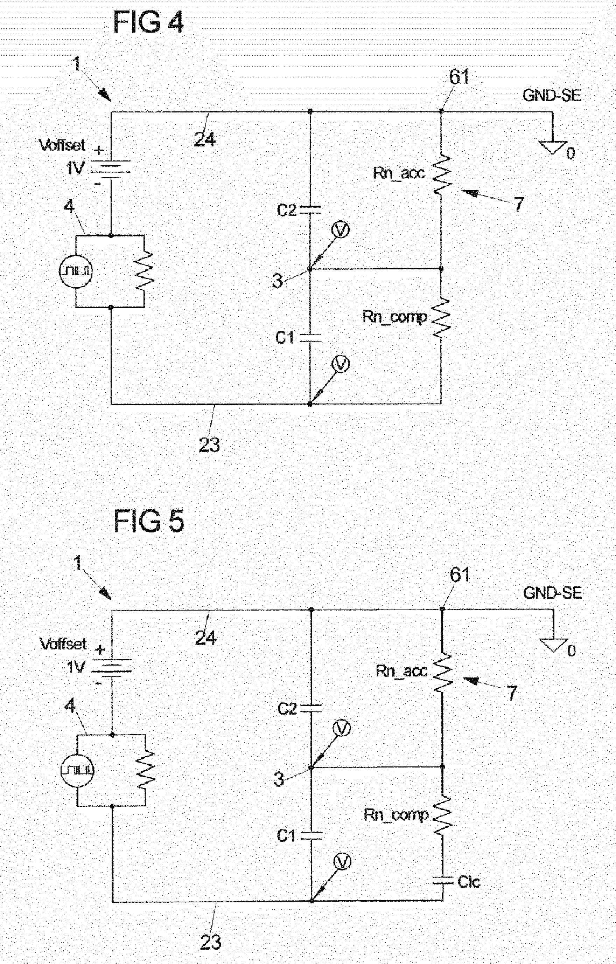

Weiterhin ist in dem Ersatzschaltbild der Fig. 3 vereinfacht, dass der longitudinal verteilte Durchgangswiderstand (im KΩ-Ohm-Bereich) des (vergrabenen) n-dotierten Gebietes 3, der in einem Modulaufbau des Modulators häufig mittels zweier Kontaktflächen (vgl. z.B. Kontaktfläche 61 in Fig. 1) vorn und hinten parallel kontaktiert wird, in dem äußeren Zugangswiderstand Rn_acc mit berücksichtigt wurde. Es wird darauf hingewiesen, dass es sich bei Fig. 3 (analog Fig. 4) um ein HF-Kleinsignalersatzschaltbild handelt, wobei die DC-Spannungsquelle 6 der Fig. 1 durch einen Kurzschluss ersetzt ist.

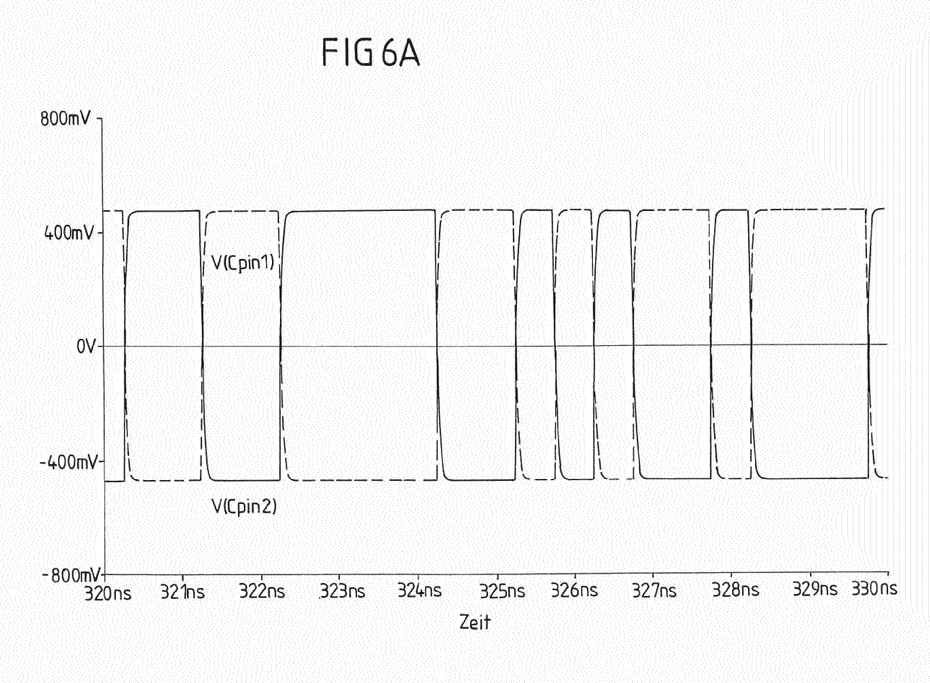

Fig. 4 zeigt ein Ersatzschaltbild eines Modulators 1 gemäß einem Ausführungsbeispiel der Erfindung. Der Aufbau des Modulators 1 entspricht demjenigen der Fig. 3 (bzw. Fig. 1). Allerdings ist parallel zur ersten Kapazität C1 ein Kompensationswiderstand Rn_comp geschaltet. Dieser Kompensationswiderstand Rn_comp reduziert oder eliminiert die erwähnten Transienten in einem Spannungsverlauf an der ersten und der zweiten Kapazität C1, C2 beim Betrieb des Modulators, was anhand einer auf Basis des Ersatzschaltbildes der Fig. 4 durchgeführten Simulation des Schaltverhaltens des Modulators nachgewiesen kann. Ein Ergebnis einer derartigen Simulation ist in Fig. 6A dargestellt, die den Spannungsverlauf an einer der Kapazitäten C1, C2 (y-Achse) in Abhängigkeit von dem angelegten HF-Signal (hier PRBS-Folgen mit 2 Gbit/s Datenrate) darstellt. Es ist zu erkennen, dass der Spannungsverlauf nahezu transientenfrei dem HF-Signal folgt.

Die Kompensation von Transienten im Spannungsverlauf mittels des Kompensationswiderstandes erfolgt insbesondere durch Angleichen der Zeitkonstanten der Kapazitäts-Widerstandspaare C2, Rn_acc und C1, Rn_comp, d.h. durch Realisierung der Beziehung:

$$C1 \times Rn\_comp = C2 \times Rn\_acc$$

Entsprechend gilt, falls die Kapazitäten C1 und C2 gleich sind, dass der Kompensationswiderstandes Rn_comp gleich dem Zuleitungswiderstand Rn_acc gewählt werden könnte.

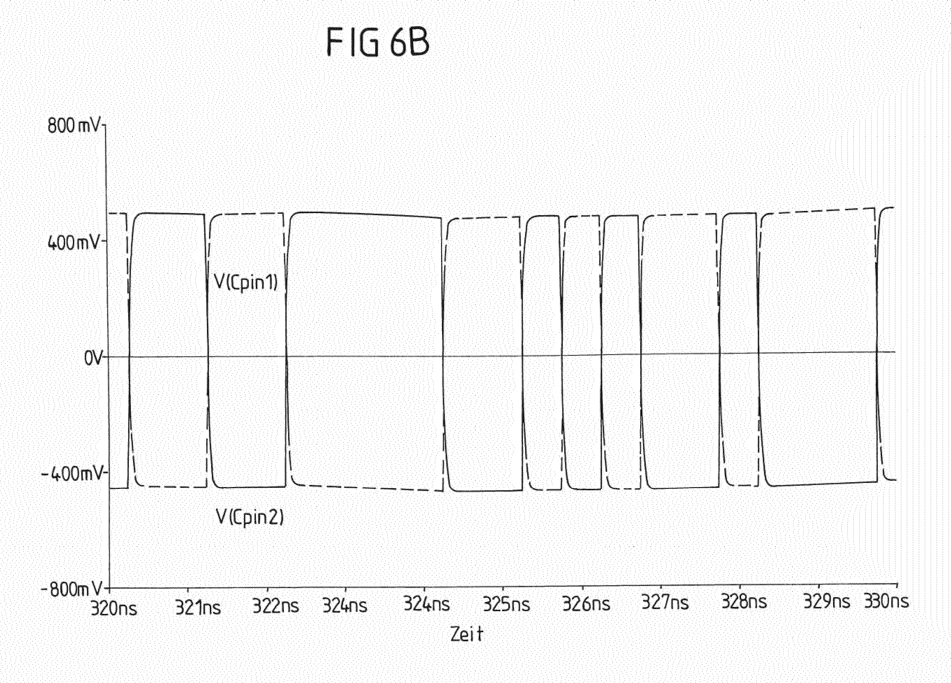

Darüber hinaus kann ein Gleichspannungsblockierkondensator (Bias-Blocking-Kondensator) vorgesehen sein; insbesondere, um die Gleichspannung (DC-Bias-Spannung) möglichst nebenstromfrei in das n-dotierte-Gebiet 3 einspeisen zu können (z.B. um eine möglichst störungsfreie Messung eines Fotostroms an einer Kontaktfläche zum n-dotierten-Gebiet 3 zu ermöglichen). Eine entsprechende Abwandlung der Fig. 4 ist in Fig. 5 dargestellt (Blockingkondensator Clc). Eine Simulation des Spannungsverlaufes für die Schaltung der Fig. 5 analog zu Fig. 6A ist in Fig. 6B gezeigt, wobei als Kapazität für den Blockingkondensator Clc 30 pF verwendet wurde.

Es wird darauf hingewiesen, dass die Ersatzschaltbilder der Fig. 4 und 5 als Vereinfachung des Travelling-Wave-Elektroden-Aufbaus des Modulators der Fig. 1 angesehen werden können, wobei die Kapazitäten C1 und C2 Gesamtkapazitäten der mehreren Kapazitäten der kapazitiven Abschnitte 111, 121 repräsentieren. Die Erfindung umfasst jedoch durchaus auch Modulatoren mit durchgehenden Wellenleiterelektroden ("Lumped-Elektroden"), wobei jeweils nur eine einzige Kapazität dem jeweiligen Wellenleiter zugeordnet ist.

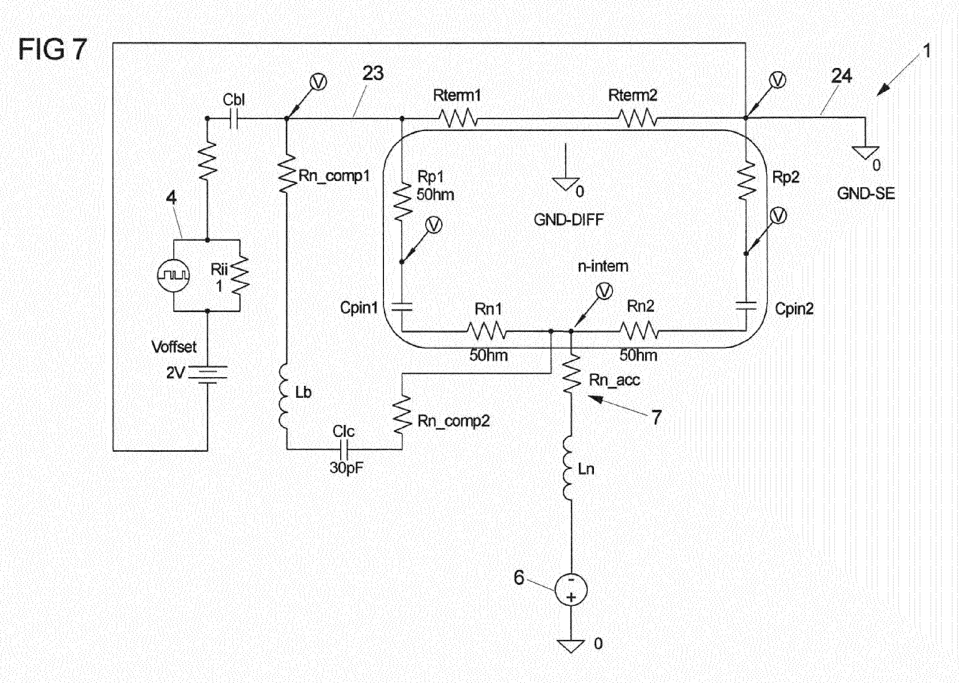

Die Fig. 7 zeigt eine Abwandlung des Ersatzschaltbildes der Fig. 5. Der Kompensationswiderstand Rn_comp ist hier auf zwei (vom Wert her insbesondere gleich große) Widerstandselemente Rn_comp1, Rn_comp2 aufgeteilt. Damit soll insbesondere eine streukapazitive Belastung der "anzuzapfenden" Signalleitung (d.h. der signalführenden Koplanarleitung 23, mit der der Kompensationswiderstand verbunden ist) und auch des gemeinsamen n-dotierten Gebietes 3 möglichst gering gehalten werden. Der Kompensationswiderstand Rn_comp (d.h. die Summe der Widerstandselemente Rn_comp1, Rn_comp2) beträgt wie erwähnt z.B. mindestens 500 Ohm (d.h. das Zehnfache der üblichen Leitungsimpedanz von 50 Ohm) und ist somit insbesondere im Sinne einer $S_{11}$-Störung vernachlässigbar. Denkbar ist zudem, dass der Kompensationswiderstand Rn_comp möglichst streukapazitätsarm in einem (insbesondere semiisolierenden) Substrat des Modulators realisiert ist.

Zusätzlich zu dem Blockingkondensator Clc ist in dem durch die Widerstandselemente Rn_comp1, Rn_comp2 und den Kondensator Clc gebildeten Kompensationspfad eine Leitungs- und/oder Bondinduktivität Lb (z.B. 700pH mit einer Länge von z.B. 1mm) vorgesehen. Des Weiteren ist der Zuleitung 7 eine Induktivität Ln zugeordnet und ein weiterer Blockingkondensator Cbl zum Schutz der HF-Spannungsquelle 4 vorgesehen.

In Fig. 7 ist auch die Gleichspannungsquelle 6 dargestellt (die eine Spannung von z.B. 5V in Sperrrichtung liefert). Darüber hinaus sind Widerstände (z.B. jeweils etwa 5 Ohm) von p-Kontaktbereichen der p-i-n-Dioden des Modulators 1 mit der Bezeichnung Rp1 bzw. Rp2, Teilwiderstände Rn1, Rn2 des n-dotierten Gebietes 3 (vgl. Fig. 1) sowie Terminierungswiderstände Rterm1, Rterm2 gezeigt. Die Terminierungswiderstände Rterm1, Rterm2 (z.B. 2 x 25 Ohm) können je nach zu untersuchender HF-Einspeisung zentral oder auf einer Seite geerdet werden. Das n-dotierte Gebiet kann zumindest näherungsweise als Äquipotentialgebiet in longitudinaler Richtung im Vergleich zum Spannungsabfall am äußeren n-Gebiets-Zugangswiderstand Rn_acc betrachtet werden (z.B. unterstützt durch sich abschnittsweise erstreckende n-Gebiets-Metall-Shunts oder selektive Epitaxie).

Möglichkeiten der konkreten Realisierung des in Fig. 7 im Ersatzschaltbild dargestellten Modulators (insbesondere des durch die Widerstandselemente Rn_comp1, Rn_comp2 und den Kondensator Clc gebildeten Kompensationspfades) sind weiter unten beschrieben.

Des Weiteren wird darauf hingewiesen, dass über den Wert der Kapazität des Blockingkondensators Clc der Kompensationspfad ein-oder ausgeschaltet werden kann. Beispielsweise kann die Kapazität sehr klein gewählt werden, um den Kompensationspfad auszuschalten, insbesondere, um eine symmetrische HF-Einspeisung zu ermöglichen (d.h. den differentiellen Betrieb des Modulators). Mithin kann ein einziges Elektrodenlayout sowohl für eine asymmetrische HF-Einspeisung (d.h. eine der Koplanarleitungen ist auf Masse) als auch für die symmetrische HF-Einspeisung (keine der Koplanarleitungen ist dauerhaft auf Masse) verwendet werden.

Eine Simulation des Schaltverhaltens des Modulators (d.h. z.B. einer Spannung an einer der Kapazitäten C1, C2) ergibt ähnlich den Simulationsergebnissen der Schaltungen der Figuren 4 und 5 einen zumindest im Wesentlichen transientenfreien Verlauf.

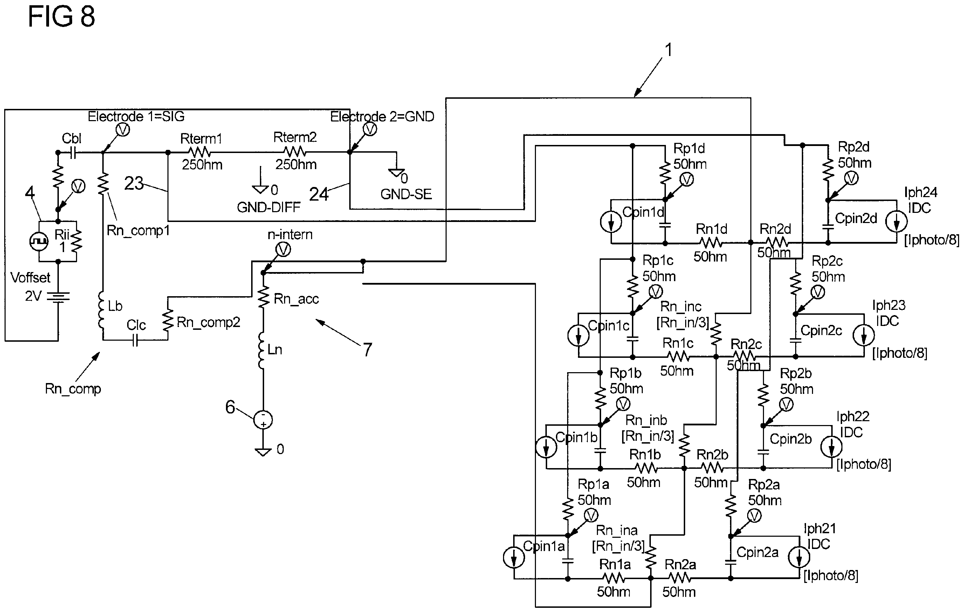

Figur 8 stellt ein weiteres Ersatzschaltbild eines erfindungsgemäßen Modulators 1 dar, das im Unterschied zu den Figuren 4, 5 und 7 anstelle der einzelner Kapazitäten C1, C2 jeweils mehrere Kapazitäten C1a-d (entsprechend den Kapazitäten der kapazitiven Abschnitte 111 des Modulators der Fig. 1) und C2a-d (entsprechend den Kapazitäten der kapazitiven Abschnitte 121) enthält. Entsprechend sind auch mehrere p-Kontaktwiderstände Rp1a-d bzw. Rp2a-d sowie mehrere Teilwiderstände Rn1a-d, Rn2a-d des n-dotierten Gebietes 3 enthalten. Im Übrigen entspricht das Ersatzschild der Fig. 7. Es wird noch darauf hingewiesen, dass der in Fig. 8 gezeigte Modulator 1 zwar vier Diodenpaare aufweist. Selbstverständlich deckt die Erfindung jedoch auch Modulatoren mit mehr oder weniger Diodenpaaren ab.

Gemäß Figur 8 sind sowohl die Widerstandselemente Rn_comp1, Rn_comp2 des Kompensationswiderstandes als auch die Zuleitung 7 abschlussseitig angeschlossen, d.h. sowohl der Kompensationswiderstand als auch die Zuleitung 7 sind mit einem hinteren Abschnitt des n-dotierten Gebietes 3 verbunden, d.h. mit einem Abschnitt, der sich im Bereich eines hinteren Endes der Koplanarleitungen 23, 24 erstreckt, das jeweils mit einem Abschlusswiderstand Rterm1, Rterm2 verbunden ist und sich entsprechend - entlang der Ausbreitungsrichtung einer in den Modulator 1 eingekoppelten optischen Welle betrachtet - hinter einem vorderen Ende der Koplanarleitungen 23, 24, über das das HF-Signal in den Modulator 1 eingespeist wird, befindet.

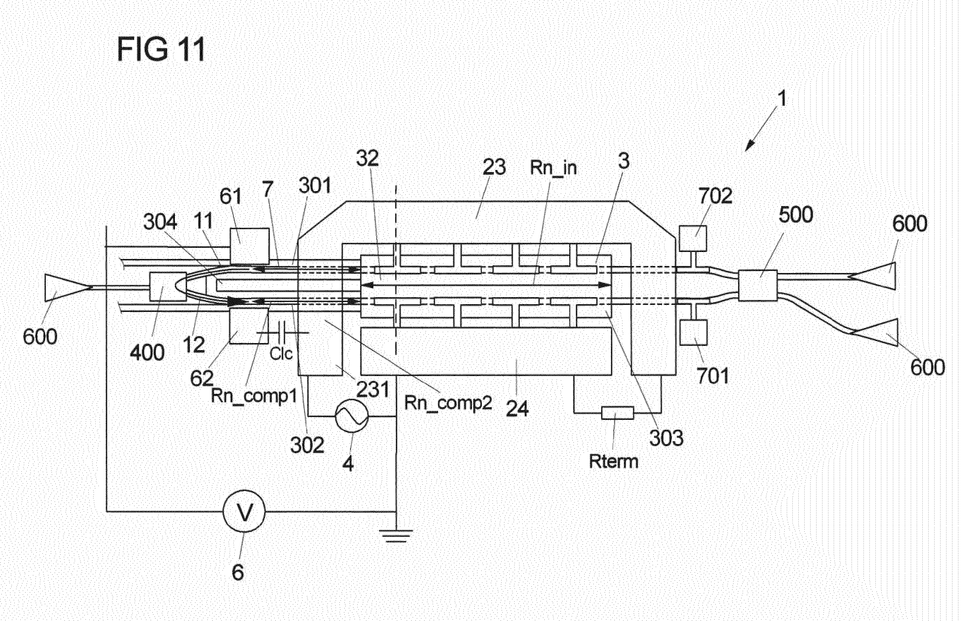

Denkbar ist natürlich auch, dass sowohl die Zuleitung 7 (mit dem Zugangswiderstand Rn_acc) als auch der Kompensationswiderstand mit den Widerstandselementen Rn_comp1, Rn_comp2 frontseitig an das n-dotierte Gebiet 3 angeschlossen sind, d.h. jeweils mit einem vorderen Abschnitt des n-dotierten Gebietes 3 verbunden sind (vgl. Fig. 11). Möglich ist zudem, dass die Zuleitung 7 frontseitig und der Kompensationswiderstand abschlussseitig an das n-dotierte Gebiet 3 angeschlossen sind. Umgekehrt könnte auch die Zuleitung 7 abschlussseitig und der Kompensationswiderstand frontseitig an das n-dotierte Gebiet 3 angeschlossen sein.

Gemäß der Fig. 8 wird auch ein longitudinaler (entlang der Ausbreitungsrichtung einer elektrischen oder optischen Welle im Modulator) Widerstand Rn_in (diskretisiert in drei Teilbahnwiderstände Rn_in/3) des n-dotierten Gebietes berücksichtigt. Der äußere Zugangswiderstand Rn_acc zum n-dotierten Gebiet kann z.B. mit 200 Ohm abgeschätzt werden. Dies ist ein Wert, der es erlaubt, mit einem gleich großen Kompensationswiderstand Rn_comp gegenüber 25 Ohm (halber Abschlusswiderstand) bzgl. der Elektrodenzusatzbelastung im Sinne noch akzeptabler $S_{11}$-Reflexion unkritisch zu dimensionieren. Der gesamte n-Gebiets-Durchgangswiderstand Rn_in kann z.B. mit 1000 Ohm abgeschätzt werden.

Eine Simulation auf Basis des in Fig. 8 dargestellten Ersatzschaltbildes ergibt wiederum einen transientenarmen Spannungsverlauf und damit die Unterdrückung oder Vermeidung eines optischen Chirps. Es kann somit eine Chirpunterdrückung auch bei nur endlich guter Leitfähigkeit des n-dotierten Gebietes erreicht werden, ohne mit den Kompensationsmaßnahmen (d.h. mit dem Kompensationswiderstand Rn_comp) an die einzelnen p-i-n-Dioden (d.h. die jeweiligen kapazitiven Abschnitte 111, 121) des Modulators heranzugehen, also ohne Eingriff in die (voroptimierte) Elektrodenstruktur (insbesondere in Form einer inneren Wanderwellenstruktur) des aktiven Modulatorteils. Darüber hinaus ist die Chirpkompensation in dem erfindungsgemäßen Modulator insbesondere durch eine entsprechende Wahl der Kapazität des Blockingkondensators Clc bis zu einer unteren cut-off Grenze herab im Prinzip frei einstellbar.

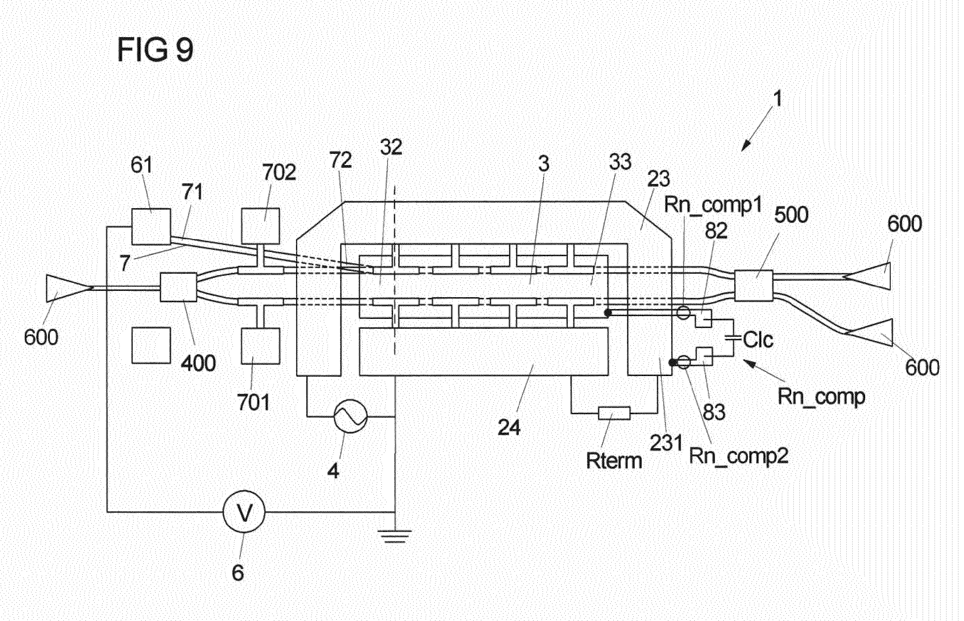

Eine mögliche Realisierung eines Modulators mit abschlussseitig angeschlossenem Kompensationswiderstand Rn_comp und frontseitig angeschlossener Gleichspannung (der "DC-Biasspannung") zeigt Fig. 9. Danach erfolgt das Anlegen der DC-Biasspannung über eine Kontaktfläche 61, die sich - entlang der Ausbreitungsrichtung der über die HF-Spannungsquelle 4 in den Modulator 1 eingespeisten elektrischen Wellen 4 betrachtet - vor den Koplanarleitungen 23, 24 des Modulators 1 befindet.

Von der Kontaktfläche 61 erstreckt sich die Zuleitung 7 zum n-dotierten Gebiet 3, wobei ein Ende 71 der Zuleitung mit der Kontaktfläche 61 verbunden ist und das andere Ende 72 mit dem n-dotierten Gebiet 3. Das Ende 72 ist mit einem vorderen Abschnitt 32 des n-dotierten Gebietes 3 verbunden, der der Kontaktfläche 61 zugewandt ist. Denkbar ist jedoch auch, dass das Ende 72 an einer anderen Stelle mit dem vorderen Abschnitt 32 des n-dotierten Gebietes 3 verbunden ist, z.B. mit einer der (unteren) Elektrode 24 abgewandten Seite des n-dotierten Gebietes 3. Die Zuleitung 7 ist wie oben bereits erwähnt insbesondere als Abschnitt einer n-dotierten Halbleiterschicht ausgebildet, die mit einem anderen Abschnitt das n-dotierte Gebiet 3 bildet.

Denkbar ist auch, dass nach Verlagern der Phasenelektroden 701, 702 an die Modulatorausgangswellenleiter und unter Ersetzen der vorderen p-i-n-Dioden zugeordnet zu den hier gezeigten Elektroden 701 und/oder 702 durch etwas verbreiterte ohmsche Kontakte seitlich zu den Wellenleitern die Zuleitung zum n-dotierten Gebiet 3 nun über die alten Kontaktflächen 701 oder 702 mittels des Mesaunterbaues der vorhandenen optischen Wellenleiter erfolgt, siehe auch Fig. 1.

Die Widerstandselemente Rn_comp1, Rn_comp2 des Kompensationswiderstandes Rn_comp sind auf einer der Kontaktfläche 61 abgewandten Seite der Koplanarleitungen 23, 24 angeordnet. Genauer ist das eine Widerstandselement Rn_comp1 mit einem hinteren Abschnitt 33 des n-dotierten Gebietes 3 verbunden, während das andere Widerstandselement Rn_comp2 mit einem hinteren Abschnitt 231 der Koplanarleitung 23 (d.h. der nicht auf Masse liegenden Signalelektrode) verbunden ist. Der hintere Abschnitt 231 der Koplanarleitung 23 erstreckt sich insbesondere zumindest näherungsweise quer zu den optischen Wellenleitern 11, 12 des Modulators 1 und befindet sich hinter der anderen Koplanarleitung 24 (die im "single-ended"-Betrieb auf Masse liegt). Zwischen den Widerstandselementen Rn_comp1, Rn_comp2 befindet sich der bereits oben beschriebene Blockingkondensator Clc. Der Blockingkondensator Clc ist insbesondere über weitere Kontaktflächen 82, 83 mit den Widerstandselementen Rn_comp1, Rn_comp2 verbunden.

Der übrige optische und elektrische Aufbau des Modulators kann in an sich bekannter Weise erfolgen. So können MMIs 400, 500 als Eingangs- bzw. Ausgangskoppler sowie optische Modentransformatoren ("spot size converter") 600 verwendet werden. Des Weiteren können Phasenelektroden 701, 702 auf den optischen Wellenleitern 11, 12 vorgesehen sein, die dazu dienen, einen Phasen-Offset unabhängig voneinander für die beiden optischen Wellenleiter 11, 12 einstellen zu können. Die Phasenelektroden 701, 702 müssen nicht zwingend vor den Koplanarleitungen 23, 24 angeordnet sein, sondern können sich durchaus auch hinter den Koplanarleitungen 23, 24 befinden.

Es wird zudem auf Folgendes hingewiesen: Für eine möglichst gute Chirpkompensation (d.h. einen möglichst transientenfreien Betrieb) sollte, wie oben bereits diskutiert, der Kompensationswiderstand Rn_comp zumindest näherungsweise dem Widerstand Rn_acc der Zuleitung entsprechen. Der oben ebenfalls bereits angesprochene Widerstand Rn_in des n-dotierten Gebietes 3 geht dabei nicht zwingend in die Dimensionierung des Kompensationswiderstandes Rn_comp ein.

Dimensionierung des Zuleitungswiderstandes Rn_acc bzw. des Kompensationswiderstandes Rn_comp:

Da die Summe aus dem Kompensationswiderstand Rn_comp und dem Zugangswidertand Rn_acc HF-technisch parallel zur HF-Spannungsquelle 4 und damit praktisch auch zum gesamten Abschlusswiderstand Rterm (z.B. 50 Ohm) liegt (vgl. z.B. auch Fig. 5), könnte im Sinne möglichst geringer S11-Reflexion (insbesondere mindestens -20 dB) Rn_comp = Rn_acc $\geq$ 5 x Rterm gewählt werden, d.h. bei einem 2 x 25 Ohm = 50 Ohm Abschlusswiderstand wäre Rn_comp = Rn_acc $\geq$ 250 Ohm, was zu einem S11 von weniger als -25 dB führt. Gleichzeitig ist die damit verbundene geringfügig erhöhte HF-Leistungsaufnahme ($\leq$ 10%) vernachlässigbar. Eine Obergrenze für Rn_acc kann durch einen fotostrombedingten und von Rn_acc abhängigen Zusatzspannungsabfall gegeben sein.

Einfluss des Durchgangswiderstand Rn_in des n-dotierten Gebietes in Relation zum Zuleitungswiderstand Rn_acc:

Auch wenn der innere (longitudinale) Durchgangswiderstand Rn_in des n-Gebietes 3 nicht direkt in die Kompensationsformel eingeht, so wäre auch für Rn_acc » Rn_in ein chirparmer Betrieb möglich (z.B. führt Rn_in = 1000 Ohm auf Rn_acc > 10.000 Ohm). Die Grenze hierfür wird insbesondere durch den Zusatzspannungsabfall an Rn_acc aufgrund des abzuführenden Fotostroms Iphoto bestimmt, der den DC-Arbeitspunkt des n-Gebiets 3 dann um Iphoto x Rn_acc (z.B. 1 mA x 10.000 Ohm = 10 V) gegenüber der äußeren Gleichspannungsquelle versetzte und damit den die Phasenverhältnisse des Modulators bestimmenden Gleichspannungsarbeitspunkt stark fotostromabhängig machte.

Anschluss des Zuleitungswiderstandes Rn_comp für den Fall Rn_acc $\geq$ 10 x Rn_in:

Falls technologisch durch geeignete Maßnahmen ein recht niederohmiger n-Gebiets-durchgangswiderstand Rn_in in Relation zu Rn_acc erreicht werden kann (z.B.

Rn_acc ≥ 10 x Rn_in), dann ist im Prinzip frei wählbar, ob der Kompensationswiderstand Rn_comp und der Zugangswiderstand Rn_acc zum n-Gebiet 3 (des aktiven Modulatorteils) beide auf derselben Seite des n-Gebietes 3 oder an einander gegenüberliegenden Seiten des n-Gebietes 3 angeschlossen werden, wie in Fig. 9 dargestellt.

Das "Anzapfen" der Signalelektrode (d.h. der Koplanarleitung 23) an ihrem hinteren ("kälteren") Ende 231 kann dazu beitragen, Störungen des Travelling-Wave-Betriebes des Modulators 1 sowie Abstrahlungseffekte möglichst gering zu halten. Dabei ist, wie oben bereits ausgeführt, die Aufteilung des Kompensationswiderstandes Rn_comp in mindestens zwei Teilwiderstände Rn_comp1, Rn_comp2 hilfreich. So wird die jeweilige streukapazitive Belastung der angezapften Elektrode 23 und des n-dotierten Gebiets 3 möglichst gering gehalten. Auch eine Streukapazität, mit der die Teilwiderstände Rn_comp1, Rn_comp2 in das Substrat (z.B. in Form eines semiisolierenden Indiumphosphidsubstrats) eingebettet sein können, könnte auf diese Weise möglichst klein gehalten werden.

Wie erwähnt, soll insbesondere gelten: Rn_comp1 + Rn_comp2 = Rn_acc. Darüber hinaus können die Widerstandselemente Rn_comp1, Rn_comp2 monolithisch mit anderen Modulatorkomponenten integriert sein. Beispielsweise können z.B. zumindest Teile der Widerstandselemente Rn_comp1 und/oder Rn_comp2 monolithisch integriert, z.B. in NiCr-Technik ausgeführt sein (insbesondere, wenn diese Technik bereits zur monolithischen Integration des Abschlusswiderstands verwendet wird).

Der serielle Blockingkondensator Clc verhindert einen Fotostrombypass zur Signalelektrode (Koplanarleitung 23), da der Fotostrom weiterhin ungestört allein über die Kontaktfläche 61 Pad gemessen werden soll. Dies kann eine Rolle spielen, wenn das n-dotierte Gebiet 3 gegenüber der Koplanarleitung 23 auf eine vergleichsweise hohe Gleichspannung im 5V-Bereich gelegt wird. Der Blockingkondensator Clc kann auf verschiedene Weise realisiert werden, worauf weiter unten noch eingegangen werden wird.

Neben der monolithischen Integration der Widerstandselemente Rn_comp1, Rn_comp2 kann z.B. auch der Blockingkondensator Clc monolithisch integriert sein; beispielsweise "on-chip", d.h. auf demselben Substrat wie die optischen Wellenleiter 11, 12 und die Koplanarleitungen 23, 24, etwa als SiNx-MIM-Kondensator. Je nach verfügbarer Flächenkapazität (z.B. ca. 600pF/mm$^2$) ist dann der Wert des Blockingkondensators Clc nach oben begrenzt, wobei z.B. Kapazitäten von über 30pF gewählt werden. Beispielsweise ist der Blockingkondensator in "Multilayer-MIM (metal-insulator-metal)"-Technik ausgebildet.

Eine monolithische Integration des kompletten Kompensationspfades (d.h. der Widerstandselemente Rn_comp1, Rn_comp2 und des Blockingkondensators Clc) ohne Zugänge via weitere seriell-geschaltete Bondpads hätte allerdings zur Folge, dass der Kompensationpfad nicht "auftrennbar" und somit stets aktiv wäre. Ein differentielle Einspeisung der HF-Spannung in die Koplanarleitungen 23, 24 wäre somit nicht möglich, sondern lediglich der asymmetrische Betrieb.

Der Blockingkondensator Clc kann daher auch als separates Bauteil ausgebildet sein, das "off-chip" (d.h. separat zu einem Substrat, auf dem z.B. die Koplanarleitungen 23, 24 angeordnet sind) und z.B. über Bonddrähte mit den Widerstandselementen Rn_comp1, Rn_comp2 verbunden ist. Beispielsweise ist der Blockingkondensator Clc in Form eines miniaturisierten SMD-Typ-ähnlichen Chipkondensators ausgeführt. Die Ausführung des Blockingkondensators Clc als separates Element ermöglicht auch eine differentielle (symmetrische) HF-Einspeisung durch Abtrennen des Blockingkondensators Clc. Die (z.B. jeweils on-chip, d.h. monolithisch integrierten, insbesondere hochohmigen Widerstandselemente Rn_comp1, Rn_comp2 hätten dann keine weitere Funktion.

Ein separater Blockingkondensator Clc erlaubt darüber hinaus z.B. auch größere Kapazitätswerte, so dass die untere Betriebsfrequenzgrenze $f_{lc}$ des Kompensationszweiges entsprechend herabgesetzt werden kann, wobei gilt

$$f_{lc} \cong 1/(2\pi \cdot Rn\_comp \cdot Clc).$$

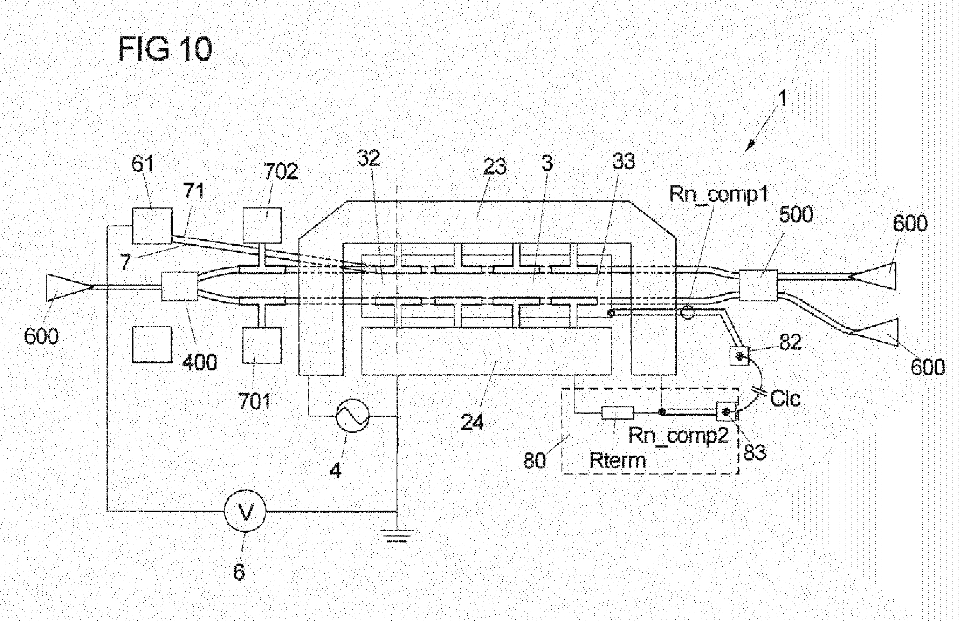

Denkbar ist zudem, dass bei einem separaten Blockingkondensator Clc zumindest eines der beiden Widerstandselemente Rn_comp1, Rn_comp2 (z.B. das Widerstandselement Rn_comp2) etwa mit in einen separaten ("off-chip") Abschlusswiderstandschip 80 (z.B. mit 2 x 25 Ohm) integriert ist, wie dies in Fig. 10 gezeigt ist.

Ein separates Verbindungselement ("Bondpad"), welches sonst das Widerstandselement Rn_comp2 mit der Koplanarleitung 23 verbindet, kann dann entfallen. Möglich ist insbesondere, dass zwar das eine Widerstandselement Rn_comp2 separat (z.B. wie erwähnt auf dem Chip des Abschlusswiderstandes) angeordnet ist, das andere Widerstandselement Rn_comp1 jedoch monolithisch integriert ist. Das Widerstandselement Rn_comp1 wird mit einer Kontaktfläche 82 (Bondpad) des Modulators 1 verbunden, wobei die Kontaktfläche 82 wiederum an den Blockingkondensator Clc angeschlossen ist. Der Blockingkondensator Clc schließlich ist mit einer Kontaktfläche 83 des Abschlusswiderstandschips 80 verbunden.

Der Blockingkondensator Clc muss jedoch natürlich nicht zusammen mit dem Abschlusswiderstandschip 80 ausgebildet sein (zumindest nicht vollständig). Vielmehr ist es auch denkbar, dass er als eigenes Bauelement ausgeführt ist. Beispielsweise ist lediglich ein Teil des Blockingkondensators Clc mit in den Abschlusswiderstandschip 80 integriert sein. Denkbar ist ebenfalls, dass der Blockingkondensator Clc allein z.B. als SMD ("surface mount design") - Cap zwischen dem Bondpad 83 auf dem Abschlusswiderstandschip 80 und dem Bondpad 82 angeordnet und mit diesen Bondpads 82, 83 verbunden ist.

Insbesondere für den Fall, dass Rn_acc = Rn_comp ≤ Rn_in gilt (was z.B. für eher uniforme Halbleiterschichtenfolgen für das n-Gebiet 3 eintreten kann), kann der Kompensationspfad vorteilhaft auf derselben Seite des n-dotierten Gebietes 3 angeschlossen werden wie die Gleichspannungszuführung 7. Dabei sind jedoch Varianten des gleichseitigen Anschlusses an dem vorderen Abschnitt des n-dotierten Gebietes 3 bzw. an dem dem Abschlusswiderstand zugewandten hinteren Abschnitt des n-dotierten Gebietes 3 möglich.

Des Weiteren kann der Modulator so gestaltet sein, dass die Zuleitung 7 elektrisch von einer Verbindung des Kompensationswiderstandes Rn_comp mit der Signal-Koplanarleitung 23 getrennt ist. Diese Variante des erfindungsgemäßen Modulators ist in Fig. 11 dargestellt. Hier sind sowohl die Zuleitung 7 als auch das Widerstandselement Rn_comp1 des Kompensationswiderstandes Rn_comp als Abschnitte 301, 302 einer n-dotierten Halbleiterschicht ausgebildet, die mit einem weiteren Abschnitt 303 auch das n-dotierte Gebiet 3 ausformt.

Dabei erstreckt sich der Abschnitt 301 der Halbleiterschicht, der die Zuleitung 7 ausbildet, von der Kontaktfläche 61 bis zu dem n-dotierten Gebiet 3. Der Abschnitt 302 der Halbleiterschicht, der das Widerstandselement Rn_comp1 ausformt, verläuft zwischen einer weiteren Kontaktfläche 62, die wie die Kontaktfläche 61 mit der n-dotierten Halbleiterschicht verbunden ist (z.B. auf dieser angeordnet ist) und dem n-dotierten Gebiet 3. Ein Teilabschnitt 231 der Signal-Koplanarleitung 23 realisiert das Widerstandselement Rn_comp2, das über den Blockingkondensator Clc mit der weiteren Kontaktfläche 62 verbunden ist. Die Widerstandselemente Rn_comp1 und Rn_comp2 sind nicht unbedingt gleich groß. So kann das durch den Teilabschnitt 231 der Signal-Koplanarleitung 23 ausgebildete Widerstandselement Rn_comp2 z.B. nur etwa 10% des gesamten Kompensationswiderstandes ausmachen (entsprechend realisiert der Abschnitt 302, d.h. das Widerstandselement Rn_comp1 90% des Gesamtkompensationswiderstandes). Denkbar ist natürlich auch eine andere Aufteilung. Möglich ist zudem auch, dass beide Widerstandselemente Rn_comp1 und Rn_comp2 jeweils als Abschnitte der n-dotierten Halbleiterschicht ausgeformt sind.

Der Blockingkondensator Clc ist entweder monolithisch integriert oder wie oben bereits erwähnt als separates Bauelement ausgebildet (z.B. auf einem Submount angeordnet). Im Ausführungsbeispiel der Fig. 11 sind sowohl die Zuleitung 7 als auch der Kompensationspfad (d.h. die Widerstandselemente Rn_comp1, Rn_comp2 und der Blockingkondensator Clc) mit einem vorderen Abschnitt 32 des n-dotierten Gebietes 3 verbunden. Denkbar wäre natürlich auch, wie oben bereits erwähnt, insbesondere abhängig von dem Verhältnis des Zuleitungswiderstandes Rn_acc und dem Durchgangswiderstand Rn_in, ein Anordnen des Kompensationspfades auf einer anderen Seite des n-dotierten Gebietes 3.

Zwischen den Abschnitten 301, 302 befindet sich ein Ätzgraben 304, der die Abschnitte 301, 303, d.h. die Zuleitung 7 und das Widerstandselement Rn_comp1 elektrisch voneinander isoliert. Eine schwach leitende ohmsche Verbindung zwischen der Zuleitung 7 und dem Kompensationspfad über die optischen Wellenleiter 11,12 und über das vordere MMI 400 kann toleriert werden.

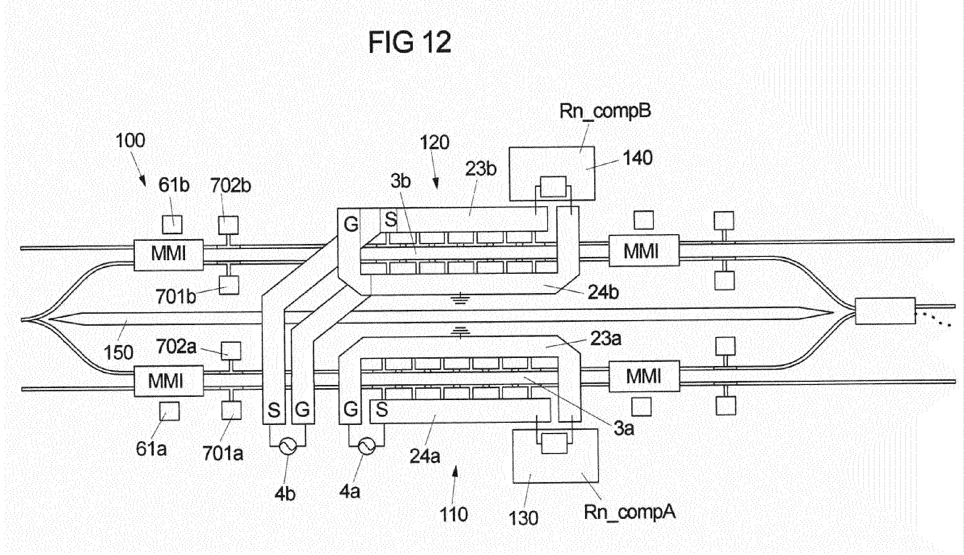

Die Modulatoren der vorhergehenden Ausführungsbeispiele können auch miteinander kombiniert werden. Ein Beispiel für eine Modulatoranordnung 100 mit zwei miteinander kombinierten erfindungsgemäßen Modulatoren 110, 120 ist in Fig. 12 dargestellt, wobei die Modulatoranordnung 100 einen IQ-Modulator realisiert. Die Modulatoren 110, 120 weisen jeweils einen Kompensationspfad (in Fig. 12 angedeutet durch die Rechtecke 130, 140) mit den Kompensationswiderständen Rn_compA, Rn_compB und jeweils einem Blockingkondensator auf. Denkbar ist natürlich auch, dass nur einer der Modulatoren 110, 120 erfindungsgemäß ausgebildet ist, d.h. einen Kompensationspfad besitzt.

Die Modulatoren 110, 120 werden in an sich bekannter Weise jeweils mit einer HF-Spannung (über Spannungsquellen 4a, 4b) beaufschlagt, wobei die Modulatoren 110, 120 jeweils asymmetrisch betrieben werden, d.h. eine der jeweiligen Koplanarleitungen 23a, 24a bzw. 23b, 24b ist mit Masse verbunden. Die Gleichspannung wird analog zu den Modulatoren der vorherigen Ausführungsbeispiele jeweils über Kontaktflächen 61a, 61b an das jeweilige n-dotierte Gebiet 3a, 3b angelegt. Zwischen den Modulatoren 110, 120 erstreckt sich ein Isolationsgraben 150.

Die Phasenelektroden können jeweils vor oder hinter den Koplanarleitungen 23a, 24a, 23b, 24b angeordnet sein. Beispielsweise werden Phasenelektroden 701a, 702a, 701b, 702b der Modulatoren 110, 120 für den Fall Rn_acc = Rn_comp ≤ Rn_in hinter den Koplanarleitungen 23a, 24a, 23b, 24b verwendet. Damit wird Platz für den Kompensationspfad vor den Koplanarleitungen 23a, 24a, 23b, 24b geschaffen, um den Kompensationspfad jeweils mit einem vorderen Abschnitt der n-dotierten Gebiete 3a, 3b verbinden zu können.

Die Erfindung ermöglicht somit insbesondere auch einen chirparmen asymmetrischen Betrieb von IQ-Modulatoren, wobei mögliche Crosstalk-Effekte zudem durch Leitungszuführungsoptimierungen außerhalb der eigentlichen Modulatorgebiete (d.h. außerhalb der jeweiligen Koplanarleitungen 23a, 24a, 23b, 24b reduziert werden können.

**Patentansprüche**

1. Elektro-optischer Modulator, mit

- einem ersten und einem zweiten optischen Wellenleiter (11, 12);

- mindestens einer ersten Kapazität (C1, C1a-d), über die eine Spannung an einen lichtführenden Bereich des ersten optischen Wellenleiters (11) anlegbar ist;

- mindestens einer zweiten Kapazität (C2, C2a-d), über die eine Spannung an einen lichtführenden Bereich des zweiten optischen Wellenleiters (12) anlegbar ist;

- einem elektrisch leitfähigen Gebiet (3, 3a, 3b), über das die erste und die zweite Kapazität (C1, C1a-d, C2, C2a-d) elektrisch miteinander verbunden sind; und

- einer Zuleitung (7) zu dem elektrisch leitfähigen Gebiet (3, 3a, 3b), über die eine Gleichspannung an das elektrisch leitfähige Gebiet (3, 3a, 3b) anlegbar ist, wobei die Zuleitung (7) so beschaffen ist, dass sie einen parallel zu der zweiten Kapazität (C2, C2a-d) geschalteten elektrischen Widerstand (Rn_acc) darstellt; **gekennzeichnet durch**

- einen parallel zur ersten Kapazität (C1, C1a-d) geschalteten Kompensationswiderstand (Rn_comp) zur Reduzierung von Transienten in einem Spannungsverlauf an der ersten und der zweiten Kapazität (C1, C1a-d, C2, C2a-d) beim Betrieb des Modulators (1, 110, 120),

wobei der Kompensationswiderstand (Rn_comp) von der ersten Kapazität (C1) oder bei mehreren ersten Kapazitäten (C1a-d) von einer ersten Gesamtkapazität C1ges, dem Widerstand (Rn_acc) der Zuleitung (7) und der zweiten Kapazität C2 bzw. bei mehreren zweiten Kapazitäten (C2a-d) von einer zweiten Gesamtkapazität C2ges abhängt, wobei das Produkt $Rn\_comp \cdot C1$ bzw. das Produkt $Rn\_comp \cdot C1ges$ im Intervall $(Rn\_acc \cdot C2)$ +- 20% bzw. $(Rn\_acc \cdot C2ges)$ +- 20% liegt.

2. Elektro-optischer Modulator nach Anspruch 1, **dadurch gekennzeichnet, dass** das Produkt $Rn\_comp \cdot C1$ bzw. das Produkt $Rn\_comp \cdot C1ges$ im Intervall $(Rn\_acc \cdot C2)$ +- 10% bzw. $(Rn\_acc \cdot C2ges)$ +- 10% liegt oder das Produkt $Rn\_comp \cdot C1$ bzw. $Rn\_comp \cdot C1ges$ dem Produkt $Rn\_acc \cdot C2$ bzw. $Rn\_acc \cdot C2ges$ entspricht.

3. Elektro-optischer Modulator nach Anspruch 1 oder 2, **dadurch gekennzeichnet, dass** der Kompensationswiderstand (Rn_comp) von dem Widerstand (Rn_acc) der Zuleitung (7) abhängt, wobei der Kompensationswiderstand (Rn_comp) im Intervall Rn_acc +- 20% oder Rn_acc +- 10% liegt oder der Kompensationswiderstand (Rn_comp) dem Widerstand (Rn_acc) der Zuleitung (7) entspricht.

4. Elektro-optischer Modulator nach einem der vorhergehenden Ansprüche, **dadurch gekennzeichnet, dass** die Zuleitung (7) zwischen dem elektrisch leitfähigen Gebiet (3, 3a, 3b) und einer mit einer Gleichspannungsquelle (6) verbindbaren Kontaktfläche (61, 61a, 61b) verläuft.

5. Elektro-optischer Modulator nach einem der Ansprüche 1 bis 3, **dadurch gekennzeichnet, dass** die Zuleitung (7) zwischen dem elektrisch leitfähigen Gebiet (3, 3a, 3b) und einer Gleichspannungsquelle (6) verläuft.

6. Elektro-optischer Modulator nach einem der vorhergehenden Ansprüche, **gekennzeichnet durch** eine erste Elektrode (23) zur Kontaktierung der ersten Kapazität (C1, C1a-d) und einer zweiten Elektrode (24) zur Kontaktierung der zweiten Kapazität (C2, C2a-d).

7. Elektro-optischer Modulator nach Anspruch 6, **dadurch gekennzeichnet, dass** der Kompensationswiderstand (Rn_comp) elektrisch einerseits mit der ersten Elektrode (23) und andererseits mit dem elektrisch leitfähigen Gebiet (3, 3a, 3b) verbunden ist.

8. Elektro-optischer Modulator nach einem der vorhergehenden Ansprüche, **dadurch gekennzeichnet, dass** der Kompensationswiderstand (Rn_comp) durch mindestens zwei in Reihe geschaltete Widerstandselemente (Rn_comp1, Rn_comp2) gebildet ist.

9. Elektro-optischer Modulator nach Anspruch 8, **dadurch gekennzeichnet, dass** seriell zu den Widerstandselementen (Rn_comp1, Rn_comp2) ein Kondensator (Clc) angeordnet ist.

10. Elektro-optischer Modulator nach einem der vorhergehenden Ansprüche, **dadurch gekennzeichnet, dass** der Kompensationswiderstand (Rn_comp) und die Zuleitung (7) jeweils mit einem - entlang der Ausbreitungsrichtung einer in den Modulator (100, 110, 120) eingekoppelten optischen Welle betrachtet - vorderen Abschnitt (32) des elektrisch leitfähigen Gebietes (3, 3a, 3b) verbunden sind, oder der Kompensationswiderstand (Rn_comp) und die Zuleitung (7) jeweils mit einem hinteren Abschnitt (33) des elektrisch leitfähigen Gebietes (3, 3a, 3b) verbunden sind.

11. Elektro-optischer Modulator nach einem der vorhergehenden Ansprüche soweit rückbezogen auf Anspruch 6, **dadurch gekennzeichnet, dass** der Kompensationswiderstand (Rn_comp) mit einem - entlang der Ausbreitungsrichtung einer in den Modulator (100, 110, 120) eingekoppelten optischen Welle betrachtet - vorderen oder hinteren Endabschnitt der ersten Elektrode (23) verbunden ist.

**12.** Elektro-optischer Modulator nach einem der vorhergehenden Ansprüche soweit rückbezogen auf Anspruch 6, **dadurch gekennzeichnet, dass** sich die Zuleitung (7) zu dem elektrisch leitfähigen Gebiet (3, 3a, 3b) von einer Kontaktfläche (61, 61a, 61b) erstreckt, die sich - entlang der Ausbreitungsrichtung einer in den Modulator (100, 110, 120) eingekoppelten optischen Welle betrachtet - vor der ersten und der zweiten Elektrode (23, 24) befindet.

**13.** Elektro-optischer Modulator nach einem der vorhergehenden Ansprüche, **dadurch gekennzeichnet, dass** der Kompensationswiderstand (Rn_comp) durch einen Teilabschnitt (302) einer dotierten Halbleiterschicht ausgebildet ist, der mit einem weiteren Teilabschnitt (303) der dotierten Halbleiterschicht verbunden ist, der das elektrisch leitfähige Gebiet (3, 3a, 3b) ausbildet.

**14.** Elektro-optischer Modulator nach einem der vorhergehenden Ansprüche, **dadurch gekennzeichnet, dass** der Modulator (1, 110, 120) ein Halbleiterbauelement ist und der Kompensationswiderstand (Rn_comp) monolithisch mit anderen Komponenten des Modulators (1, 110, 120) integriert ist.

**15.** Elektro-optischer Modulator nach einem der vorhergehenden Ansprüche soweit rückbezogen auf Anspruch 13, **dadurch gekennzeichnet, dass** zumindest eines der Widerstandselemente (Rn_comp1, Rn_comp2) monolithisch mit anderen Komponenten des Modulators (1, 110, 120) integriert ist.

**Claims**

**1.** Electro-optical modulator, comprising

- a first and a second optical waveguide (11, 12);
- at least one first capacitance (C1, C1a-d), via which a voltage can be applied to a light-guiding region of the first optical waveguide (11);
- at least one second capacitance (C2, C2a-d), via which a voltage can be applied to a light-guiding region of the second optical waveguide (12);
- an electrically conductive region (3, 3a, 3b), via which the first and second capacitances (C1, C1a-d, C2, C2a-d) are electrically connected to one another; and
- a feed line (7) to the electrically conductive region (3, 3a, 3b), via which feed line a DC voltage can be applied to the electrically conductive region (3, 3a, 3b), wherein the feed line (7) is constituted such that it represents an electrical resistance (Rn_acc) connected in parallel with the second capacitance (C2, C2a-d); **characterized by**

- a compensation resistance (Rn_comp) connected in parallel with the first capacitance (C1, C1a-d) and serving for reducing transients in a voltage profile on the first and second capacitances (C1, C1a-d, C2, C2a-d) during the operation of the modulator (1, 110, 120),

wherein the compensation resistance (Rn_comp) is dependent on the first capacitance (C1) or, in the case of a plurality of first capacitances (C1a-d), on a first total capacitance C1tot, the resistance (Rn_acc) of the feed line (7) and the second capacitance C2 or, in the case of a plurality of second capacitances (C2a-d), on a second total capacitance C2tot, wherein the product Rn_comp · C1 or the product Rn_comp · C1tot lies in the interval (Rn_acc · C2) +- 20% or (Rn_acc · C2tot) +- 20%.

**2.** Electro-optical modulator according to Claim 1, **characterized in that** the product Rn_comp · C1 or the product Rn_comp · C1tot lies in the interval (Rn_acc · C2) +- 10% or (Rn_acc · C2tot) +- 10% or the product Rn_comp · C1 or Rn_comp · C1tot corresponds to the product Rn_acc · C2 or Rn_acc · C2tot.

**3.** Electro-optical modulator according to Claim 1 or 2, **characterized in that** the compensation resistance (Rn_comp) is dependent on the resistance (Rn_acc) of the feed line (7), wherein the compensation resistance (Rn_comp) lies in the interval Rn_acc +- 20% or Rn_acc +- 10% or the compensation resistance (Rn_comp) corresponds to the resistance (Rn_acc) of the feed line (7).

**4.** Electro-optical modulator according to any of the preceding claims, **characterized in that** the feed line (7) runs between the electrically conductive region (3, 3a, 3b) and a contact pad (61, 61a, 61b) that can be connected to a DC voltage source (6).

**5.** Electro-optical modulator according to any of Claims 1 to 3, **characterized in that** the feed line (7) runs between the electrically conductive region (3, 3a, 3b) and a DC voltage source (6).

**6.** Electro-optical modulator according to any of the preceding claims, **characterized by** a first electrode (23) for contacting the first capacitance (C1, C1a-d) and a second electrode (24) for contacting the second capacitance (C2, C2a_d).

**7.** Electro-optical modulator according to Claim 6, **characterized in that** the compensation resistance (Rn_comp) is electrically connected firstly to the first electrode (23) and secondly to the electrically conductive region (3, 3a, 3b).

**8.** Electro-optical modulator according to any of the preceding claims, **characterized in that** the compensation resistance (Rn_comp) is formed by at least two series-connected resistance elements (Rn_comp1, Rn_comp2).

**9.** Electro-optical modulator according to Claim 8, **characterized in that** a capacitor (Clc) is arranged in series with the resistance elements (Rn_comp1, Rn_comp2).

**10.** Electro-optical modulator according to any of the preceding claims, **characterized in that** the compensation resistance (Rn_comp) and the feed line (7) are connected in each case to a front section (32) - as viewed along the direction of propagation of an optical wave coupled into the modulator (100, 110, 120) - of the electrically conductive region (3, 3a, 3b), or the compensation resistance (Rn_comp) and the feed line (7) are connected in each case to a rear section (33) of the electrically conductive region (3, 3a, 3b).

**11.** Electro-optical modulator according to any of the preceding claims in so far as referring back to Claim 6, **characterized in that** the compensation resistance (Rn_comp) is connected to a front or rear end section - as viewed along the direction of propagation of an optical wave coupled into the modulator (100, 110, 120) - of the first electrode (23) .

**12.** Electro-optical modulator according to any of the preceding claims in so far as referring back to Claim 6, **characterized in that** the feed line (7) to the electrically conductive region (3, 3a, 3b) extends from a contact pad (61, 61a, 61b) situated - as viewed along the direction of propagation of an optical wave coupled into the modulator (100, 110, 120) - upstream of the first and second electrodes (23, 24).

**13.** Electro-optical modulator according to any of the preceding claims, **characterized in that** the compensation resistance (Rn_comp) is formed by a partial section (302) of a doped semiconductor layer that is connected to a further partial section (303) of the doped semiconductor layer, said further partial section forming the electrically conductive region (3, 3a, 3b).

**14.** Electro-optical modulator according to any of the preceding claims, **characterized in that** the modulator (1, 110, 120) is a semiconductor component and the compensation resistance (Rn_comp) is monolithically integrated with other components of the modulator (1, 110, 120).

**15.** Electro-optical modulator according to any of the preceding claims in so far as referring back to Claim 13, **characterized in that** at least one of the resistance elements (Rn_comp1, Rn_comp2) is monolithically integrated with other components of the modulator (1, 110, 120).

**Revendications**

**1.** Modulateur électro-optique, comprenant

- un premier et un deuxième guide d'ondes optique (11, 12) ;
- au moins une première capacité (C1, C1a-d), par le biais de laquelle une tension peut être appliquée à une zone conduisant la lumière du premier guide d'ondes optique (11) ;
- au moins une deuxième capacité (C2, C2a-d), par le biais de laquelle une tension peut être appliquée à une zone conduisant la lumière du deuxième guide d'ondes optique (12) ;
- une région électriquement conductrice (3, 3a, 3b), par le biais de laquelle la première et la deuxième capacité (C1, C1a-d, C2, C2a-d) sont reliées électriquement l'une à l'autre ; et
- une ligne d'arrivée (7) vers la région électriquement conductrice (3, 3a, 3b), par le biais de laquelle une tension continue peut être appliquée à la région électriquement conductrice (3, 3a, 3b), la ligne d'arrivée (7) étant conçue de telle sorte qu'elle représente une résistance électrique (Rn_acc) branchée en parallèle de la deuxième capacité (C2, C2a-d) ; **caractérisé par**
- une résistance de compensation (Rn_comp) branchée en parallèle de la première capacité (C1, C1a-d) servant à la réduction des transitoires dans une courbe de tension aux bornes de la première et de la deuxième capacité (C1, C1a-d, C2, C2a-d) lors du fonctionnement du modulateur (1, 110, 120),

la résistance de compensation (Rn_comp) étant dépendante de la première capacité (C1) ou, en présence de plusieurs premières capacités (C1a-d), d'une première capacité totale C1ges, de la résistance (Rn_acc) de la ligne d'arrivée (7) et de la deuxième capacité (C2) ou, en présence de plusieurs deuxièmes capacités (C2a-d), d'une deuxième capacité totale C2ges, le produit Rn_comp · C1 ou le produit Rn_comp · C1ges étant compris dans l'intervalle (Rn_acc · C2) +/-20 % ou (Rn_acc · C2ges) +/-20 %.

**2.** Modulateur électro-optique selon la revendication 1, **caractérisé en ce que** le produit Rn_comp · C1 ou le produit Rn_comp · C1ges est compris dans l'intervalle (Rn_acc · C2) +/-10 % ou (Rn_acc · C2ges) +/-10 %, ou le produit Rn_comp · C1 ou Rn_comp · C1ges correspond au produit Rn_acc · C2 ou Rn_acc · C2ges.

3. Modulateur électro-optique selon la revendication 1 ou 2, **caractérisé en ce que** la résistance de compensation (Rn_comp) dépend de la résistance (Rn_acc) de la ligne d'arrivée (7), la résistance de compensation (Rn_comp) étant comprise dans l'intervalle Rn_acc +/-20 % ou Rn_acc +/-10 %, ou la résistance de compensation (Rn_comp) correspondant à la résistance (Rn_acc) de la ligne d'arrivée (7).

4. Modulateur électro-optique selon l'une des revendications précédentes, **caractérisé en ce que** la ligne d'arrivée (7) suit un tracé entre la région électriquement conductrice (3, 3a, 3b) et une surface de contact (61, 61a, 61b) qui peut être reliée à une source de tension continue (6).

5. Modulateur électro-optique selon l'une des revendications 1 à 3, **caractérisé en ce que** la ligne d'arrivée (7) suit un tracé entre la région électriquement conductrice (3, 3a, 3b) et une source de tension continue (6).

6. Modulateur électro-optique selon l'une des revendications précédentes, **caractérisé par** une première électrode (23) destinée à entrer en contact avec la première capacité (C1, C1a-d) et une deuxième électrode (24) destinée à entrer en contact avec la deuxième capacité (C2, C2a-d).

7. Modulateur électro-optique selon la revendication 6, **caractérisé en ce que** la résistance de compensation (Rn_comp) est reliée électriquement d'un côté à la première électrode (23) et de l'autre côté à la région électriquement conductrice (3, 3a, 3b).

8. Modulateur électro-optique selon l'une des revendications précédentes, **caractérisé en ce que** la résistance de compensation (Rn_comp) est formée par au moins deux éléments résistifs (Rn_comp1, Rn_comp2) branchés en série.

9. Modulateur électro-optique selon la revendication 8, **caractérisé en ce qu'**un condensateur (Clc) est monté en série avec les éléments résistifs (Rn_comp1, Rn_comp2).

10. Modulateur électro-optique selon l'une des revendications précédentes, **caractérisé en ce que** la résistance de compensation (Rn_comp) et la ligne d'arrivée (7) sont respectivement reliées - en observant le long de la direction de propagation d'une onde optique injectée dans le modulateur (100, 110, 120) - à une portion avant (32) de la région électriquement conductrice (3, 3a, 3b), ou la résistance de compensation (Rn_comp) et la ligne d'arrivée (7) sont respectivement reliées à une portion arrière (33) de la région électriquement conductrice (3, 3a, 3b).

11. Modulateur électro-optique selon l'une des revendications précédentes, sous réserve de se référer à la revendication 6, **caractérisé en ce que** la résistance de compensation (Rn_comp) est reliée à une portion d'extrémité avant ou arrière - en observant le long de la direction de propagation d'une onde optique injectée dans le modulateur (100, 110, 120) - de la première électrode (23).

12. Modulateur électro-optique selon l'une des revendications précédentes, sous réserve de se référer à la revendication 6, **caractérisé en ce que** la ligne d'arrivée (7) s'étend vers la région électriquement conductrice (3, 3a, 3b) depuis une surface de contact (61, 61a, 61b) qui se trouve - en observant le long de la direction de propagation d'une onde optique injectée dans le modulateur (100, 110, 120) - avant la première et la deuxième électrode (23, 24).

13. Modulateur électro-optique selon l'une des revendications précédentes, **caractérisé en ce que** la résistance de compensation (Rn_comp) est formée par une portion partielle (302) d'une couche en semiconducteur dopée, qui est reliée à une portion partielle supplémentaire (303) de la couche en semiconducteur dopée, laquelle forme la région électriquement conductrice (3, 3a, 3b).

14. Modulateur électro-optique selon l'une des revendications précédentes, **caractérisé en ce que** le modulateur (1, 110, 120) est un composant semiconducteur et la résistance de compensation (Rn_comp) est intégrée de manière monolithique avec d'autres composants du modulateur (1, 110, 120).

15. Modulateur électro-optique selon l'une des revendications précédentes, sous réserve de se référer à la revendication 13, **caractérisé en ce qu'**au moins l'un des éléments résistifs (Rn_comp1, Rn_comp2) est intégré de manière monolithique avec d'autres composants du modulateur (1, 110, 120).

FIG1

# FIG 2

# FIG 3

**FIG 4**

**FIG 5**

# FIG 6A

EP 3 234 688 B1

FIG 6B

FIG 7

EP 3 234 688 B1

FIG 8

FIG 9

EP 3 234 688 B1

FIG 10

FIG 11

EP 3 234 688 B1

FIG 12

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013104715 A

- JP 2004151590 A

**In der Beschreibung aufgeführte Nicht-Patentliteratur**

- **R. G. WALKER.** High-Speed III-V Semiconductor Intensity Modulators. *IEEE J. Quantum Electronics,* 1991, vol. 27 (3), 654-667
- **K.-O. VELTHAUS et al.** High performance InP-based Mach-Zehnder modulators for 10 to 100 Gb/s optical fiber transmission systems. *IPRM,* 2011

- **T. KATO et al.** 10 Gb/s - 80-km operation of full C-band InP MZ modulator with linear-accelerator-type tiny in-line centipede electrode structure directly driven by logic IC of 90-nm CMOS process. *Optical Fiber Communication Conference and Exposition,* 2011, 1